**Europäisches Patentamt**

(19) **European Patent Office**

**Office européen des brevets**

(11) Publication number : **0 324 554 B1**

(12) **EUROPEAN PATENT SPECIFICATION**

(45) Date of publication of patent specification :
**11.11.92 Bulletin 92/46**

(51) Int. Cl.⁵ : **C08L 21/00,** A61J 1/00,
// (C08L21/00, 23:06)

(21) Application number : **89300120.6**

(22) Date of filing : **06.01.89**

(54) **Improvements in rubber for medical or pharmaceutical articles.**

The file contains technical information
submitted after the application was filed and
not included in this specification

(30) Priority : **06.01.88 JP 275/88**

(43) Date of publication of application :
**19.07.89 Bulletin 89/29**

(45) Publication of the grant of the patent :
**11.11.92 Bulletin 92/46**

(84) Designated Contracting States :
**CH DE FR GB IT LI**

(56) References cited :
**EP-A- 0 117 015**

(56) References cited :
**CHEMICAL PATENTS INDEX, BASIC AB-
STRACTS JOURNAL, section A, week 8548,
29th January 1986, A0588, no. 85-300316/48,
DerwentPublications Ltd, London, GB; & JP-
A-60 208 335 (TORITSU KOGYO K.K.) 19-
10-1985
CHEMICAL PATENTS INDEX, BASIC AB-
STRACTS JOURNAL, section A, week 8536,
30th October 1985, 677, no. 85-221389/36, Der-
wentPublications Ltd, London, GB; & JP-A-60
144 346 (TORITU KOGYO K.K.) 30-07-1985**

(73) Proprietor : **DAIKYO GOMU SEIKO LTD.
No. 38-2, Sumida 3-chome Sumida-ku
Tokyo (JP)**

(72) Inventor : **Muraki, Tomoyasu
1-1-4, Aoyamadai
Abiko-shi Chiba-ken (JP)**
Inventor : **Tajima, Masao
3-7-4, Mizumoto
Katsushika-ku Tokyo (JP)**

(74) Representative : **Alexander, Thomas Bruce et
al
Boult, Wade & Tennant 27 Furnival Street
London EC4A 1PQ (GB)**

Jouve, 18, rue Saint-Denis, 75001 PARIS

## Description

This invention relates to improvements in rubber for articles for medical or pharmaceutical use.

Rubber articles for use in these fields are required to have high standards of safety, sanitation and stability from the standpoint of influences upon human bodies, as standardized in various test methods and quality standards. For example, methods of testing rubber stoppers and plastic containers for aqueous infusions are laid down by the 11th Revision, Japanese Pharmacopoeia (hereinafter referred to as "the 11th Revision"), standards for dialysis type artificial kidney devices are set out in Notification No. 494 of the Welfare Ministry, West Germany Industrial Standard DIN 58,366 - 58,368, British Standard 3263 (1960) and US Pharmacopoeia (U.S.P.) XXI. Articles made from rubber according to the present invention are capable of satisfying not only these tests and standards but also tests for features which have recently become a problem, for example, the amount of fine particles shed by the rubber articles, the shedding of rubber fragments and liquid leakage when piercing a rubber stopper with a needle and the absorption amount of a liquid medicament, and furthermore the rubber article has superior economical efficiency.

In addition to glass materials which have been used for a very long time in the fields of science and medicine, plastic materials have more recently also been used for making containers for medicaments and medical instruments.

As a sealing material, for example, isoprene-isobutylene copolymer rubbers (IIR) are preferably used. Addition of polyethylene fine powder to rubbers has been proposed as disclosed in Japanese Patent Publication No. 8789/1970 and it has also been proposed to blend IIR or rubbers having ethylene, butadiene and isoprene groups with ultra-high molecular weight polyethylene as disclosed in Japanese Patent Laid-Open Publication Nos. 144346/1985 and 208335/1985. According to these proposals, safe and sanitary rubber articles can be made capable of satisfying the sanitary test requirements as they can be made by using a fine powder of ultra-high molecular weight polyethylene as a rubber filler without subjecting the resulting rubber article to any special processing.

The present invention provides a sanitary rubber composition for articles capable of satifying the quality standards for medical and pharmaceutical use.

The present invention also provides a rubber article for medical or pharmaceutical use, having a high standard of safety, sanitation and stability.

Thus in accordance with the present invention there is provided a rubber article for medical or pharmaceutical use, which comprises 100 parts by weight of polybutadiene or styrene butadiene rubber, 2 to 30 parts by weight of finely powdered polyethylene having a particle diameter size of 0.1 to 10 m$\mu$, preferably 1 to 5 m$\mu$ and an average molecular weight of 100 x $10^4$ to 10000 x $10^4$, 1 to 15 parts by weight of powdered or pelletized polyethylene having an average molecular weight of 5 x $10^4$ to 80 x $10^4$, 2 to 15 parts by weight of synthetic white carbon having an average particle size of 7 to 40 m$\mu$ and a specific surface area of 50 to 300 m$^2$/g and 0.01 to 5.0 parts by weight of a bridging agent.

A preferred embodiment of the invention will now be described by way of reference to the accompanying drawing, in which;

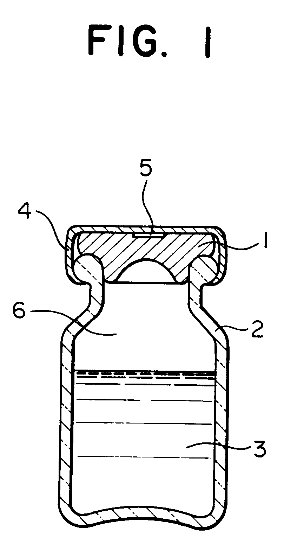

Fig. 1 is a vertical sectional view of a rubber stopper.

The inventors have made further studies on the varieties and quantities of the synthetic rubbers and compounding reagents used in the rubber article proposed in the above described Japanese Patent Laid-Open Publication No. 208335/1985 and consequently, have found that addition of a specified inorganic reinforcing filler and bridging agent in specified amounts to specified rubbers results in a rubber article having more improved properties such as to be suitable for use in this field and having very excellent quality and sanitation. The present invention is based on this finding.

Accordingly, the present invention provides a rubber article for medical and pharmaceutical use, which consists of a composition comprising 2 to 30 parts by weight of finely powdered polyethylene (UHMWPE) having a particle diameter size of 0.1 to 10 m$\mu$, preferably 1 to 5 m$\mu$ and an average molecular weight of 100 x $10^4$ to 10000 x $10^4$, 1 to 15 parts by weight of powdered or pelletized polyethylene (PE) having an average molecular weight of 5 x $10^4$ to 80 x $10^4$, 2 to 15 parts by weight of synthetic white carbon having an average particle size of 7 to 40 m$\mu$ and a specific surface area of 50 to 300 m$^2$/g and 0.01 to 5.0 parts by weight of an aliphatic or alicyclic peroxide, sulphur or sulphur-containing compound per 100 parts by weight of polybutadiene (BR) or styrene butadiene rubber (SBR), said composition being bridged or crosslinked and shaped.

BR or SBR used in the present invention can be prepared by solution polymerization in the presence of a Zieglernatta Catalyst. BR has preferably a cis-1, 4-butadiene content of at least 85% by weight and SBR has preferably a styrene content of 18 to 48% by weight. These rubbers are preferably stabilized by adding at most about 1 part by weight of a non-contaminating stabilizer such as 2,6-t-butyl-p-cresol (BHT), tetra-bis (methylene-3(3′,5′-di-t-butyl-4′-hydroxyphenyl) propionate)methane, $\alpha$-tocopherol or triphenyl phosphite, BR or SBR is commercially available in the form of high purity at a low price and can be bridged with a small amount of a bridging agent so that an eluate from the product rubber with water can be reduced.

UHMWPE used in the rubber composition is preferably in the form of a fine powder having a particle size of 0.1 to 10 mμ in diameter and an ultra-high molecular weight, i.e. average molecular weight of 100 x 10⁴ to 10000 x 10⁴. UHMWPE is polyethylene, for example, prepared by polymerizing ethylene using a Ziegler catalyst as in the case of PE having an ordinary molecular weight of 5 x 10⁴ to 80 x 10⁴ as determined by the viscosity method, and has a larger molecular weight, i.e. at least 100 x 10⁴ as determined by the viscosity method and at least 300 x 10⁴ as determined by the light scattering method and a higher melting point, i.e. about 140 to 150°C and 150 to 170°C as determined by the differential scanning calorimetry method, than the commonly used PE. Such UHMWPE is superior in abrasion resistance, impact resistance, self lubricity and chemical resistance to other engineering plastics.

For use in the rubber composition, UHMWPE is prepared, for example, by a process as proposed in Japanese Patent Laid-Open Publication Nos. 163935/1985 and 106807/1985 and is classified into a fine powder with a particle size of 0.1 to 10 mμ, preferably 1 to 5 mμ and added in a proportion of 2 to 30 parts by weight, preferably 4 to 15 parts by weight to 100 parts by weight of BR or SBR. Thus, the quantity of an inorganic filler to be blended can be decreased whereby to attain advantages that leakage of a liquid medicament during piercing of a rubber stopper made from this composition by a syringe needle can be reduced and there is no rubber fragmentation of the stopper. If the particle size is smaller than 0.1 mμ, UHMWPE tends to aggregate, thus resulting in difficulty in the preparation and an increased cost, while if larger than 10 mμ, the penetrability of an injection needle deteriorates. If the quantity of UHMWPE to be added to the synthetic rubber is less than 2 parts by weight, the addition effect cannot be obtained, while if more than 30 parts by weight, the heat shrinkage and needle penetrability deteriorate, which should be avoided.

## Table 1

| | Average Molecular Weight (x 10⁴) | Physical Properties | | Structure Feature Branched No. | Polymerization Method |
| | | Density(g/cm³) | Melting * Point(°C) | | |
|---|---|---|---|---|---|
| High Density PE (HDPE) | 8 - 80 | 0.95-0.96 | 134-135 | short branched chains 0 - 5 | ion polymerization |
| Linear Low Density PE (LLDPE) | 5 - 15 | 0.91-0.94 | 120-130 | short branched chains 10-20 | " " |
| High Pressure Process PE (HPLDPE BLDPE) | 5 - 25 | 0.91-0.94 | 105-120 | long and short branched chains 10 or more | radical polymerization |

*measured by differential scanning calorimeter

The PE used in the composition is preferably in the form of a powder or pellet having an average molecular weight of 5 x 10⁴ to 80 x 10⁴ and is added in a proportion of 1 to 15 parts by weight of BR or SBR to improve the compatibility of the rubber and UHMWPE. As such PE, for example, there can be used high density polyethylene (HDPE), linear low density polyethylene (LLDPE) and high pressure process polyethylene (HPLDPE or BLDPE), in the form of powders or pellets. Such PE is preferably used in the form of a powder. If the average molecular weight of PE exceeds 80 x 10⁴, it is hard to uniformly disperse it in the rubber. If the quantity of PE to be added is less than 1 part by weight, the above described effect cannot be obtained, while if more than 15 parts by weight, physical properties suitable for rubber articles in this field cannot be given and it is necessary to add larger amounts of a bridging agent and bridging aid. This results in an increase of residues of the bridging agent and bridging aid in the rubber and thus causes problems of consumption of KMnO₄, increase of evaporation residues, lack of sanitation, etc. For this reason, it is particularly preferable to use LLDPE,

3

HPLDPE and BLDPE (see comparison of properties with HPDE in table 1).

The white carbon used in the present invention is a synthetic one preferably containing at least 85% by weight of silicic anhydride and having an average particle diameter of 7 to 40 m$\mu$ and a specific surface area of 50 to 300 m$^2$/g, and is added in a proportion of 2 to 15 parts by weight to 100 parts by weight of BR or SBR to prevent the rubber article from thermal deformation, for example, due to high pressure steam sterilization or high temperature sterilization.

For obtaining the above described effect, it is most important from the standpoint of workability to uniformly disperse the white carbon in a mixture of BR or SBR, PE and UHMWPE. If the average particle diameter of the white carbon is smaller than 7 m$\mu$, the white carbon particles tend to aggregate and the water absorbing property of the rubber composition is increased, whilst if the average particle diameter is larger than 40 m$\mu$, the rubber reinforcing effect cannot be given, which is unfavourable. If the specific surface area is smaller than 50 m$^2$/g, the white carbon exhibits less surface activity and functions as a mere extender.

An aliphatic or alicyclic peroxide as a bridging or crosslinking agent is added in a proportion of 0.01 to 5.0 parts by weight to 100 parts by weight of BR or SBR, thereby bridging and shaping BR or SBR and PE. The aliphatic or alicyclic peroxide used in the present composition includes, for example, 3,3,5-trimethylhexanone peroxide, diisobutyryl peroxide, 1,1-di(t-butylperoxy)-3,3,5-trimethylcyclohexane, 2,5-dimethyl-2,5-di(t-butyl-peroxy)hexane, 2,5-dimethyl-2,5-di(t-butylperoxy)hexyne-3,n-butyl-4,4-bis(t-butylperoxy)-valerate, di(cyclohexylperoxy)dicarbonate di-sec-butylperoxy dicarbonate and the like. Furthermore, as the bridging agent, sulphur and sulphur-containing compounds such as tetramethylthiuram monosulphide, dipentamethylenethiuram tetrasulphide, etc. are also effective.

Examples of the bridging aid optionally used in the present composition are triethylene glycol dimethacrylate, trimethylolpropane trimethacrylate, 1,2-polybutadiene, vinyltrimethoxysilane, vinyltriacetoxysilane, $\gamma$-methacryloxypropyl-trimethoxysilane, $\gamma$-glycidoxypropyltrimethoxysilane, triallyl isocyanurate and the like.

In the case of using a sulphur-containing compound as the bridging agent, zinc oxide or stearic acid is preferably used as the bridging aid. Furthermore, pigments such as titanium oxides, carbon blacks, ultramarine blue, iron oxide red, etc. can be added if necessary.

The above described raw materials, that is, BR or SBR, UHMWPE, PE, white carbon and aliphatic or alicyclic bridging agent are uniformly mixed, and then subjected simultaneously to bridging and shaping in a known manner. For example, the raw materials are uniformly mixed by the use of an internal mixer and sheeted in a predetermined thickness. Then, a metal mold having a hollow corresponding to the shape of a product is previously heated at a temperature of 160 to 190°C and the rubber composition of the present invention is poured in the hollow of the metal mold, heated and compressed, thereby effecting simultaneously the bridging and shaping. The thus resulting intermediate shaped product is then subjected to trimming or punching one by one, washing with an alkaline solution, washing with water and drying.

A rubber article consisting of the rubber composition obtained as described above, has such excellent properties that it can be used in medical or pharmaceutical uses without laminating it with a resin film or coating it with a silicone oil to improve lubricity.

That is, the rubber article of the present invention is capable of satisfying not only the quality properties as standardized by the 11th Revision, Japanese Pharmacopoeia, DIN, BS, USP, etc. but also a number of requirements of rubber articles used in connection with medicaments, in particular, liquid medicaments, i.e. fewer fine particles being shed by the surface of the rubber, fewer rubber fragments being shed during piercing of the rubber article by a syringe needle, less liquid leakage when withdrawing a syringe needle, less liquid absorbed by the rubber, suitable lubricity of the rubber surface, alkali resistance, less water absorption and drying reduction and less gas in a head space. Furthermore, when using the preferred rubber composition for a rubber stopper, the resulting article is superior in compressive permanent set, ageing resistance and flexibility, based on the physical properties of the rubber itself.

In the preferred embodiment of the invention, as described above, specified amounts of UHMWPE, PE and the specified white carbon are added to BR or SBR and bridged with the specified peroxide to prepare a rubber composition suitable for use in a rubber article for medical or pharmaceutical use. In particular, such a rubber article satisfies the legal tests required in various countries as to the amounts of heavy metals such as Pb or Cd present in the rubber, the amount of eluate and the other aforementioned tests etc. In addition, production of an article with this rubber composition can be accomplished in a conventional manner without requiring special laminating or coating steps.

The following examples are given in order to illustrate the present invention in greater detail without limiting the same, in which parts and percentages are to be taken as those by weight unless otherwise indicated.

Examples

Examples 1 to 7 and Comparative Examples 1 to 3

(1) Compounds

The following raw materials were mixed in proportions as shown in Table 2 to obtain rubber compositions according to the present invention (Examples 1 to 7):

BR: JSR BR 01 (Registered Trade Mark and commercial name, made by Japan Synthetic Rubber Co.) containing BHC as an antioxidant and cis-content of 98%, $ML_{1+4}(100°C)$ 44;

UHMWPE: HIZEX MILLION (Registered Trade Mark and commercial name, made by Mitsui Sekiyu Kagaku Kogyo KK) having an average molecular weight of $200 \times 10^4$ (ASTM D 2857, viscosity method), melting point of 136°C (ASTM D 2117) and particle diameter of 1 to 5 mµ (microscope method);

PE-1: ULTRAZEX C (Registered Trade Mark and commercial name, Mitsui Sekiyu Kagaku Kogyo KK) having a melting point of 103°C (LLDPE method);

PE-2: SHOWREX (Registered Trade Mark and commercial name, LDPE made by Showa Denko KK) having a softening point of 92°C;

White Carbon-1: AEROSIL (Registered Trade Mark and commercial name, made by Nippon Aerosil KK) having an average particle diameter of 40 mµ;

Bridging Agent: PERHEXA 3M (Registered Trade Mark and commercial name for 1,1-di(t-butylperoxy)-3,3,5-trimethylcyclohexane made by Nippon Yushi KK);

Bridging Aid-1: ACRYESTER TMP (Registered Trade Mark and commercial name for trimethylolpropane trimethacrylate made by Mitsubishi Rayon KK);

Pigment-1: TIPAQUE A-100 (Registered Trade Mark and commercial name for finely powdered titanium oxide of anatase type made by Ishihara Sangyo KK);

Pigment-2: SEAST NH (Registered Trade Mark and commercial name, carbon black made by Tokai Carbon KK);

Using AEROSIL and/or White Carbon-1 and -2 hereinafter described, rubber compositions mixed in the proportions as shown in Table 2 for comparison were obtained (Comparative Examples 1 to 3).

Extender-1: WHITETEX (Registered Trade Mark and commercial name, clay, $SiO_2 + Al_2O_3$, made by Southern Clay Co.)

Extender-2: DIXIE CLAY (Registered Trade Mark and commercial name, clay, $SiO_2$ 55% + $Al_2O_3$ 39%, made by R.T. Vanderbild Co.)

Table 2

| Compounding Agents | | Examples | | | | | | | Comparative Examples | | |
|---|---|---|---|---|---|---|---|---|---|---|---|
| Example No. | | 1 | 2 | 3 | 4 | 5 | 6 | 7 | 1 | 2 | 3 |
| BR | | parts 100 | parts 100 | parts 100 | parts 100 | parts 100 | parts 100 | parts 100 | parts 100 | parts 100 | parts 100 |
| UHMWPE | | 14 | 7 | 3 | 14 | 2 | 7 | 21 | 7 | 15 | - |
| PE | Ultrazex C | - | 7 | - | 8 | 12 | - | 4 | 4 | - | 7 |
| | Showrex M | 4 | 2 | 12 | 2 | - | 8 | - | - | - | - |
| White Carbon | Aerosil | 2 | 4 | 8 | 8 | 12 | 12 | 8 | 6 | 3 | - |
| Extender | $SiO_2 + Al_2O_3$ | - | - | - | - | - | - | - | - | 5 | - |
| | $SiO_2$ 55% + $Al_2O_3$ 39% | - | - | - | - | - | - | - | 5 | - | 10 |
| Bridging Agent | | 0.5 | 0.4 | 0.5 | 0.3 | 0.8 | 0.4 | 0.4 | 0.7 | 0.3 | 0.6 |
| Bridging Aid | Trimethylolpropane Trimethacrylate | - | 0.2 | 0.5 | 0.2 | - | 0.3 | 0.1 | - | 0.1 | 0.2 |
| Pigment | Titanium Oxide | - | 5 | - | 11 | 10 | - | 3 | - | 5 | - |
| | Seast NH | - | - | 0.001 | 0.001 | - | 0.001 | - | 0.001 | - | - |

(2) Bridging and Shaping to obtain Product

Non-vulcanized compound rubber sheets of Examples 1 to 7 and Comparative Examples 1 to 3 shown in Table 2 were arranged between two metal molds each having recesses therein in the shape of a rubber stopper 1 as shown in Fig. 1 and heated at a temperature of 165 ± 1°C at a pressure of 6.7 to 8.8 MPa (70 to 90 kg/cm²) for 20 minutes, thus bridging the composition and shaping the sheets. The thus shaped sheets were taken out of the metal molds, cooled, subjected to trimming one by one, boiled in a 2% $Na_2CO_3$ solution for 10 minutes, washed with pure water and dried to obtain rubber stoppers each having a shape 1 as shown in Fig. 1.

### (3) Tests

The resulting rubber stoppers of Examples 1 to 7 and Comparative Examples 1 to 3 were subjected to the following tests A to F to determine their properties. The results and estimation standards are shown in Table 3. "                              " in the Remarks column of Table 3 means that there is no official standard or no regulation.

A. Tests (A-1 to A-6) according to "43. Test Methods of Rubber Stoppers for Liquor Transfusion" of the 11th Revision, Japanese Pharmacopoeia.

(i) Cadmium (Cd) and (ii) Lead (Pb): Using 10.0g of a sample (2.5 times that recommended in the 11th Revision), determinationm of the heavy metal content of the rubber was carried out by the atomic absorption spectrometry according to the above-mentioned standard.

(iii) Extractive Substances: Water was added to a sample in an amount of 10 times thereof and the sample was subjected to heating and extracting with high pressure steam at 121°C for 30 minutes. The extraction standard of the 11th Revision is the severest of those of DIN and BS at 121°C for 30 minutes and USP at 70°C for 1 hour.

(iv) Acute Systemic Toxicity (v) Pyrogen Test and (vi) Hemolysis Test: These tests were effected according to the regulations of the 11th Revision. DIN, BS and USP have the similar requirements but their test methods are somewhat different.

B. Detection Test of Metallic Elements.

30% $HNO_3$ was added to 10.0 ml of the test solution obtained in an analogous manner to (iii) Elution Test to 20 ml and then subjected to determination by the atomic absorption spectrometry method using acetylene gas. Pb: lead hollow cathode discharge tube 283.3 nm; Cd: cadmium hollow cathode discharge tube 422.7 nm; Mg: magnesium hollow cathode discharge tube 285.2 nm; As: according to the arsenic test method of the 11th Revision.

C. Tests (C-1 to C-4) according to "44. Test Methods of Plastic Containers for Aqueous Infusions, Polyethylene or Polypropylene Containers" of 11th Revision.

Cl, $SO_4$, $PO_3$, $NH_3$: Tests were carried out according to (vii) Elution Test, (d) Chlorides, (e) Sulphates, (f) Phosphates and (g) Ammonium.

D. Tests of Volatile Substances (D-1 and D-2).

Preparation of Test Solutions: A test solution was prepared by charging a rubber stopper in a hard Erlenmeyer flask, to which purified water in an amount of 10 times of the rubber stopper was added, wrapping it with aluminum foil, heating at 60°C for 30 minutes, cooling by water and removing the rubber stopper.

Formaldehyde: To 5 ml of the test solution was added 5 ml of acetylacetone solution obtained by adding water to 150 g of acetylammonium, 3 ml of acetic acid and 2 ml of acetylacetone to 1000 ml, heated in a boiled water bath for 10 minutes and then subjected to colorimetry.

Phenols: To 30 ml of the test solution was added 3 ml of a $H_3BO_3$ buffer solution (1 N NaOH:1 N $H_3BO_3$ = 9:10 mixed solution) and adequately shaken, to which 5 ml of 4-aminoantipyrine (1.36 g was dissolved in water to give a total volume of 1000 ml), 2.5 ml of $K_3Fe(CN)_6$ solution (8.6g was dissolved in 1.8 ml of aqueous solution of NaOH and water to give a total volume of 1000 ml) and water were added to give a total volume of 50 ml. The mixture was mixed adequately, allowed to stand at room temperature for 10 minutes and then subjected to measurement of absorbency at a wave length of 510 nm. This is a test requirement for stabilizers of rubbers.

E. Sulphide Test by DIN.

A rubber stopper having a surface area of 20cm$^2$ was charged in a 100 ml Erlenmeyer flask, to which 2% by weight citric acid was added to 5ml. A lead acetate paper was placed in the flask, covered by a measuring dish, subjected to heating by steam at 121 ± 1°C for 30 minutes in a pressure vessel and discoloration of the lead acetate paper in black was subjected to colorimetric analysis.

The following Tests F to P are tests on the important requirements which have lately become an issue, but have no legal test laws, nor standard values except some tests.

F. Test of Amount of Fine Particles occurring from Rubber Stopper.

10 rubber stoppers were charged in a hard glass bottle, to which 300 ml of dust-free water was added, wrapped with a film and then shaked by hand at about 2 rev/sec for 20 seconds. The glass bottle was allowed to stand for 1 hour and then subjected to measurement of fine particles using a particle counter of light blockage type (manufactured by HIAC Co.). This is the most important requirement, since fine particles of 5 μm or smaller in diameter in an injection liquor can block a blood vessel

G. Rubber Fragmentation.

8 ml of water 3 was charged in a 10 ml bottle 2 having a form as shown in Fig. 1, closed by a rubber stopper 1 and fastened by an aluminum cap 4. 2 ml of water was charged in a cylinder provided with a test needle 22 G (0.70 x 32 mm), which was made to penetrate the head space 6 of a rubber stopper 20 times at the area designated for needle insertion. At the 20th penetration, the water in the syringe was injected into the bottle and the needle was then withdrawn. After the bottle was shaken, the rubber stopper was removed, the contents filtered and rubber fragments on the filter paper were counted. This test method corresponds to an improvement of BS. That is, the BS standard requires a maximum of 3 rubber fragments, but in this field, it is desirable to suppress rubber fragments to a maximum of 2.

H. Liquid Leakage (Self-Sealability) Test.

A bottle was charged with 500 ml of water, which was then sealed with a rubber stopper and fastened by an aluminum cap. After heating the bottle at 121°C for 30 minutes in a pressure vessel, a plastic needle (Plastic Needle No. 200 provided with an aqueous infusion set, made by JMS) was used to pierce the rubber stopper, and allowed to stand for 1 hour whilst keeping the bottle upside down. An air needle was then used to withdraw 400 ml of the water from the bottle. At that time, the rocket needle was pulled out from the rubber stopper and liquid leakage was observed. This is an improvement of the BS test method.

I. Water Repellency Test.

A bottle was charged with distilled water, closed by a rubber stopper, further fastened by an aluminum cap, placed in a pressure vessel and heated at 121°C for 30 minutes, allowed to stand at room temperature for 24 hours and the inner wall of the bottle observed for fine water drops. The presence of no water drops means "standing the test".

J. Determination of Penetrability of Syringe Needle.

A force was measured by a tension tester when a syringe needle (21 S.W.G. outer diameter 0.813 mm, length 38 mm) was used to penetrate a rubber stopper at a rate of 20 cm/min. This is an improvement of the BS test method, in which a rubber stopper exhibiting a penetrating force of at most 1000 g stands the test.

K. Rubber Surface Lubricity (Adhesiveness) Test.

When a rubber stopper was placed on a teflon plate and one end of the teflon plate raised at a predetermined rate, the angle corresponding to movement of the rubber stopper was measured.

L. Water Vapour Transmission Test

A glass bottle was charged with an aqueous solution of 2% by weight of NaCl, fastened by an aluminum cap, stored at room temperature for 6 months in a dessiccator containing silica gel and thereafter, the weight change was measured to determine the quantity of water vapour transmission through the rubber stopper. This is the inventor's independent standard test.

M. Gas Components Test in Head Space

A glass bottle 2 was charged with an aqueous solution of 2% by weight of NaCl 3, closed by a rubber stopper 1 and further fastened by an aluminum cap 4, as shown in Fig. 1. This glass bottle was steam-heated at 121 ± 1°C for 60 minutes in a pressure vessel and then allowed to stand for cooling. Thereafter, 5 ml of the gas in a head space 6 of the bottle was removed by syringe and subjected to analysis by a gas chromatography (column: 10% OV-101, 180-100 mesh WHP; carrier gas: He 50 ml/min; column temperature: 100 → 200°C at a rate of 4°C/min). This test is an important one which examines microamounts of gases occurring due to the rubber and compounding agents, which has lately become a problem.

N. Alkaline Solution Resistance Test.

An alkali resistance container was charged with a rubber stopper and a 0.5% by weight solution of $Na_2CO_3$ in an amount of 10 times by weight of the rubber stopper, closed by the rubber stopper, fastened by an aluminum cap, subjected to steam-heating at 121°C for 30 minutes in a high pressure vessel, allowed to stand at room temperature for cooling and after removing the rubber stopper, subjected to measurement of the transmission of visible rays of wavelengths 430 and 650 nm using a quartz cell.

O. Water Absorption and Drying Reduction Test.

A rubber stopper was dried at 105°C for 3 hours, allowed to stand for 30 minutes in a dessiccator containing a drying agent and then subjected to precise measurement of its weight. Then, the rubber stopper was immersed in purified water in the quantity of 10 times the volume of the rubber stopper and subjected to steam-heating at a temperature of 121 ± 1°C for 30 minutes in a pressure vessel. After cooling, the rubber stopper was allowed to stand for 30 minutes in the dessiccator and the increased weight at that time was precisely measured, thus obtaining the amount of water absorption and drying reduction.

P. Medicament Absorption Test.

A test medicament was diluted with a physiological salt solution to prepare a 0.040% by weight solution and a 10 ml bottle was charged with precisely 3 ml of this solution, which was closed by a rubber stopper, fastened by an aluminum cap and allowed to stand for 24 hours while keeping the bottle upside down. The resulting solution was used as a test solution and subjected to measurement of the change in concentration, thus obtaining a measurement of absorption.

P-1

A test solution of isosorbide nitrate (medicament for ischemic heart disease, melting point 72°C, Isobide - Registered Trade Mark and commercial name- made by Nikken Seiyaku) was used for the above described test and subjected to analysis by a high performance liquid chromatography (column: FINEPAK SIL C 18 -Registered Trade Mark and commercial name- made by Nippon Bunko KK; moving phase; methanol: water = 7 : 3; flow rate: 1 ml/min; detector: UVIDEC 100-IV (220nm, Registered Trade Mark and commercial name, made by Nippon Bunko KK).

P-2

A test solution of diazepam (minor tranquillizer, anticonvulsion drug, melting point 130 to 134°C) was used for the above described test and subjected to measurement of the maximum wavelength of 284 nm using an ultraviolet absorption spectrophotometer (made by Hitachi Seisakujo KK) to examine a change of concentration, thus obtaining a quantitiy of absorption (%).

(4) Test Results

As shown in Table 3, the rubber stopper of the present invention is capable of satisfying the "Test Methods of Rubber Stoppers for liquid Transfusion" and "Test Methods of Plastic Containers" according to the 11th Revision, other test methods and DIN standard and further standing the test methods under severer conditions than the BS test methods, with regard to rubber fragmentation, liquid leakage, penetrability of syringe needle, etc. Furthermore, such a rubber article is capable of satisfying the important test requirements which are not official requirements, but which have lately become an issue, i.e. the amount of fine particles being shed by a rubber stopper, alkaline solution resistance, absorption of medicaments, water repellency, rubber surface lubricity, water vapour transmission, gas components in the head space in a bottle etc. It is clearly be understood that the rubber articles of the present invention are superior to the rubber articles of Comparative Examples 1 to 3 with respect to the various requirements.

Table 3

| Marks | Item | Examples | | | | | | | Comparative Examples | | | Remarks (Standards, Standing Values) |
|---|---|---|---|---|---|---|---|---|---|---|---|---|
| | Example No. | 1 | 2 | 3 | 4 | 5 | 6 | 7 | 1 | 2 | 3 | |
| A-1 | Cd (ppm) | <0.5 | <0.5 | <0.5 | <0.5 | <0.5 | <0.5 | <0.5 | <1 | <1 | <1 | 11-th Revision, 5 ppm or less |
| A-2 | Pb (ppm) | <1 | <1 | <1 | <1 | <1 | <1 | <1 | <1 | <1 | <1 | ", 5 ppm or less |
| A-3 | Properties (%) | 99.5 | 99.5 | 99.5 | 99.5 | 99.5 | 99.5 | 99.5 | 99.2 | 99.2 | 99.0 | ", 99.0 % or more |
| | Foaming (min) | <2 | <2 | <2 | <2 | <2 | <2 | <2 | 2 | 2 | 3 | ", within 3 min. |
| | pH | 0.5 | 0.6 | 0.5 | 0.6 | 0.7 | 0.5 | 0.7 | 0.9 | 1.0 | 0.9 | ", 1.0 or less |
| | Zn (ppm) | <0.5 | <0.5 | <0.5 | <0.5 | <0.5 | <0.5 | <0.5 | 1.2 | 2.3 | 1.8 | ", 1 µg/ml or less |
| | KMnO4 Reducing (ml) | 0.6 | 0.8 | 0.9 | 0.8 | 0.6 | 0.7 | 0.9 | 1.8 | 2.1 | 1.7 | ", 2.0ml or less, DIN 1.5ml/10ml or less |
| | Evaporation Residue (mg) | 0.6 | 0.7 | 0.9 | 0.6 | 0.7 | 0.8 | 0.7 | 2.3 | 2.5 | 1.9 | ", 2.0mg or less, DIN 4mg/100ml or less |
| | UV Absorption Spectrum | 0.1 | 0.08 | 0.08 | 0.07 | 0.09 | 0.13 | 0.11 | 0.3 | 0.34 | 0.41 | ", 0.20 or less |
| A-4 | Acute Systemic Toxicity Test | adapted | " | " | " | " | " | " | " | " | " | ", no abnormality, nor death |
| A-5 | Pyrogen Test | " | " | " | " | " | " | " | " | " | " | ", no fever |
| A-6 | Hemolysis Test | " | " | " | " | " | " | " | " | " | " | ", not hemolytic |
| B-1 | Pb (ppm) | <0.2 | <0.2 | <0.2 | <0.2 | <0.2 | <0.2 | <0.2 | 2.6 | 1.3 | 3.2 | DIN 0.01 mg Pb2+/10ml or less |
| B-2 | Ca ( " ) | <0.5 | <0.5 | <0.5 | <0.5 | <0.5 | <0.5 | <0.5 | 4.3 | 3.8 | 8.3 | — |
| B-3 | Mg ( " ) | <0.5 | <0.5 | <0.5 | <0.5 | <0.5 | <0.5 | <0.5 | 3.5 | 4.7 | 6.3 | — |
| B-4 | As ( " ) | <0.1 | <0.1 | <0.1 | <0.1 | <0.1 | <0.1 | <0.1 | 0.8 | 0.6 | 1.1 | 11-th Revision, note coloration |
| C-1 | Cl ( " ) | 4 | 3 | 5 | 9 | 7 | 6 | 4 | 40 | 32 | 63 | 11-th Revision —, DIN 0.04mg/10ml or less |
| C-2 | SO4 ( " ) | 0.6 | 0.7 | 0.8 | 1.1 | 0.9 | 0.7 | 0.8 | 1.6 | 2.1 | 3.1 | 11-th Revision — |
| C-3 | PO3 ( " ) | 0.5 | 0.3 | 0.4 | 0.3 | 0.5 | 0.6 | 0.7 | 1.0 | 1.4 | 1.3 | 11-th Revision |
| C-4 | NH3 ( " ) | 0.2 | 0.4 | 0.3 | 0.3 | 0.4 | 0.3 | 0.2 | 1.3 | 1.5 | 1.8 | 11-th Revision 0.5µg/ml or less, DIN 0.02 mg/10 ml or less |

## Table 3  (continued)

| Marks | Item | Example No. 1 | 2 | 3 | 4 | 5 | 6 | 7 | 1 | 2 | 3 | Remarks (Standards, Standing Values) |
|---|---|---|---|---|---|---|---|---|---|---|---|---|
| D-1 | Formaldehyde | <1 | <1 | <1 | <1 | <1 | <1 | <1 | <5 | <5 | <5 | 11-th Revision, Detection Limit 0.5µg/ml |
| D-2 | Phenols | <0.5 | <0.5 | <0.5 | <0.5 | <0.5 | <0.5 | <0.5 | <5 | <5 | <5 | — — |
| E | Sulfide Test | <5 | <5 | <5 | <5 | <5 | <5 | <5 | <10 | <10 | <10 | DIN $Na_2S$ 0.05 mg/20 $cm^2$ |
| F-1 | Fine Particles (number) | | | | | | | | | | | — — |
| | 5 µm or less | 21 | 16 | 23 | 32 | 22 | 26 | 60 | 82 | 97 | 103 | |
| | 20 µm or less | 0 | 0 | 0 | 1 | 0 | 1 | 2 | 6 | 7 | 8 | |
| G | Rubber Fragmentation | 0 | 0 | 0 | 1 | 0 | 1 | 0 | 5 | 8 | 6 | BS 3 fragments or less |
| H | Liquid Leakage (ml) | 0 | 0 | 1 | 0 | 2 | 0 | 1 | 6 | 7 | 4 | — — |
| I | Water Repellency | no | no | no | no | no | no | no | no | no | no | — no water drops |
| J | Needle Penetration | 0.23 | 0.2 | 0.21 | 0.24 | 0.3 | 0.22 | 0.27 | 0.6 | 0.56 | 0.48 | BS 1000 g or less |
| K | Rubber Surface Lubricity (angle°) | 40 | 38 | 38 | 41 | 40 | 38 | 37 | 43 | 44 | 43 | — — |
| L | Water Vapor Transmission (g) | 0.4 | 0.7 | 0.5 | 0.6 | 0.4 | 0.3 | 0.5 | 2.6 | 2.9 | 2.2 | — — |
| M | Gas Test in Head Space | | | | | | | | | | | — — |
| N | Alkali Resistance Test | 99 | 99 | 99 | 99 | 99 | 99 | 99 | 95 | 93 | 94 | — — |
| O | Water Absorption and Drying Reduction | 100.2 | 100.1 | 100.1 | 100.2 | 100.2 | 100.2 | 100.2 | 102 | 103 | 103 | — — |
| P-1 | Isosorbide Nitrate | 1.3 | 1.4 | 1.3 | 1.6 | 1.3 | 1.7 | 1.8 | 2.9 | 3.2 | 5.0 | — — |
| P-2 | Diazepam | 1.5 | 2 | 4 | 3 | 4 | 2 | 3 | 19 | 12 | 18 | — — |

Examples 8 to 10 and Comparative Examples 4 to 10 (SBR)

(1) Compounds

The following raw materials were mixed in the proportions shown in Table 4 to obtain rubber compositions according to the present invention (Examples 8 to 10) and comparative rubber compositions (Comparative Examples 4 to 7):

SBR: JSR SL 552 (Registered Trade Mark and commercial name, made by Japan Synthetic Rubber Co.) having a styrene content of 24% and cis-content of 20%, $ML_{1+4}$(100°C) 55;

IR: NIPOL IR 2205 (Registered Trade Mark and commercial name, made by Nippon Zeon KK), $ML_{1+4}$(100°C) 84, cis-content 98%;

Natural Rubber: bleaching pale crepe (from Malaysia);

UHMWPE: HIZEX MILLION (same as used in Examples 1 to 7);

PE-3: FLO-THENE (Registered Trade Mark and commercial name, made by Seitetsu Kagaku KK), medium density, melting point (ASTM D 2117) 120°C;

EPDM: ESPRENE 512 F (Registered Trade Mark and commercial name, made by Sumitomo Kagaku KK), $ML_{1+4}$(100°C) 90, propylene content 40%;

BIIR: POLYSAR BROMOBUTYL 2030 (Registered Trade Mark and commercial name, made by Polysar Ltd.) having a Br content of 1.9%;

White Carbon: NIPSIL VN 3 (Registered Trade Mark and commercial name, made by Nippon Silica KK) having a particle diameter of 15 to 25 mμ, $SiO_2$ content of 93 to 94% and specific surface area of 240 m$^2$/g;

Extender-3: MISTRON VAPOR (Registered Trade Mark and commercial name, Sierra Talc Co.), talc, particle diameter at most 2 μm, $SiO_2$ 63% - $Al_2O_3$ 37%;

Bridging Agent-1: DITTO (Registered Trade Mark and commercial name for di(cyclohexylperoxy) dicarbonate made by Sanken Kako KK);

Bridging Agent-2: ACCEL TRA (Registered Trade Mark and commercial name for dipentamethylene thiuram tetrasulphide made by Kawaguchi Kagaku KK);

Bridging Aid-2: KBM 803 (Registered Trade Mark and commercial name for γ-mercaptopropyltrimethoxysilane made by Shinetsu Kagaku KK);

Bridging Aid-3: WNACS-30 (Registered Trade Mark and commercial name for stearic acid made by KAO Co.);

Bridging Aid-4: TAIC (Registered Trade Mark and commercial name for triallyl isocyanurate made by Nippon Kasei KK);

Pigment-1: finely powered titanium oxide (same as used in Examples 1 to 7)

Pigment-2: SEAST NH (same as used in Examples 1 to 7).

(2) Bridging and Shaping to obtain Product, and Tests

Non-vulcanized compound rubber sheets of Examples 8 to 10 and Comparative Examples 4 to 10 as shown in Table 4 were subjected to bridging and shaping at a metal mold temperature of 165°C and a rubber pressure of 5.87 MPa (60 kg/cm$^2$) for 12 minutes and then to the after-treatment similar to that of Examples 1 to 7, thus obtaining rubber stoppers. Each of these rubber stoppers was tested in an analogous manner to examples 1 to 7.

(3) Test Results

As shown in Table 5, the rubber article according to the present invention (Examples 8 to 10) is superior to the comparative article (Comparative Examples 4 to 10) with respect to the test requirements A to P, in particular, the test requirements F to P which have lately become an important problem.

# Table 4

| | Compounding Agents | Examples | | | Comparative Examples | | | | | | |
|---|---|---|---|---|---|---|---|---|---|---|---|
| | | 8 | 9 | 10 | 4 | 5 | 6 | 7 | 8 | 9 | 10 |
| Rubber | SBR | parts 100 | parts 80 | parts 92 | parts 100 | parts 100 | - | - | parts 100 | parts 100 | parts 100 |
| | IR | - | - | - | - | - | parts 100 | - | - | - | - |
| | Natural Rubber | - | - | - | - | - | - | parts 100 | - | - | - |
| | EPDM | - | 20 | - | - | - | - | - | - | - | - |
| | BIIR | - | - | 8 | - | - | - | - | - | - | - |
| | UMHWPE | 5 | 3 | 3 | 5 | - | - | 2 | 5 | 5 | 5 |
| | PE - 3 | 5 | 3 | 8 | 5 | 12 | 15 | - | 5 | 5 | 5 |
| | White Carbon | 5 | 8 | 7 | 20 | 8 | 50 | - | - | 1 | 20 |
| | Filler (Talc) | - | - | - | - | 50 | - | 50 | - | - | - |
| Bridging Agent | Di(cyclohexylperoxy) Dicarbonate | 0.2 | 0.7 | 0.4 | - | 0.4 | 0.5 | - | 0.7 | 0.7 | 0.7 |
| | Dipentamethylene Thiuram(Tetrasulfide) | - | - | - | 2.5 | - | - | 2.2 | - | - | - |
| Bridging Aid | Zinc White | - | 1 | 2 | 1 | 1 | 1 | 1 | - | - | - |
| | $\gamma$-Mercaptopropyl- trimethoxysilane | 1 | - | 1 | - | - | - | - | 0.3 | 0.3 | 0.3 |
| | Stearic Acid | - | - | - | 2 | - | 3 | 2 | - | - | - |
| | Triallylisocyanurate | - | - | - | - | 2 | - | - | - | - | - |
| Pigment | Titanium Oxide | 5 | 8 | 5 | - | 5 | - | 5 | - | - | - |
| | Seast NH | - | 0.001 | 0.001 | - | 0.001 | - | - | - | - | - |

EP 0 324 554 B1

EP 0 324 554 B1

Table 5

| Marks | Items | Examples 8 | 9 | 10 | Comparative Examples 4 | 5 | 6 | 7 | 8 | 9 | 10 | Remarks (Standards, Standing Values) |
|---|---|---|---|---|---|---|---|---|---|---|---|---|
| A-1 | Cd (ppm) | <0.5 | <0.5 | <0.5 | <3 | 3 | 3 | 3 | 3 | 3 | <3 | 11-th Revision, 5 ppm or less |
| A-2 | Pb (ppm) | <1 | <1 | <1 | <5 | 7.8 5 | | 8.2 | <5 | <5 | <5 | " , 5 ppm or less |
| A-3 | Properties(%) | 99.5 | 99.5 | 99.5 | 99 | 99 | 99 | 99 | 98 | 98 | 99.5 | " , 99.0 % or more |
| | Foaming (min) | <2 | <2 | <2 | 3 | 3 | 3 | 3 | 3 | 3 | 3 | " , within 3 min. |
| | pH | 0.6 | 0.8 | 0.5 | 1.0 | 0.8 | 1.2 | 1.0 | 1.5 | 1.3 | 1.0 | " , 1.0 or less |
| | Zn (ppm) | <0.5 | <1 | <1 | 1.3 | 3.3 | 2.1 | 3.8 | 3.9 | 3.5 | 3.1 | " , 1 µg/ml or less |
| | KMnO$_4$ Reducing (ml) | 0.6 | 18 | 0.9 | 1.9 | 2.1 | 3.6 | 3.2 | 4.3 | 4.0 | 2.0 | " , 2.0 ml or less, DIN 1.5ml/10ml or less |
| | Evaporation Residue (mg) | 0.8 | 0.9 | 0.7 | 1.8 | 2.0 | 2.6 | 2.8 | 3.7 | 3.4 | 2.0 | " , 2.0mg or less,DIN 4mg/100ml or less |
| | UV Absorption Spectrum | 0.08 | 0.12 | 0.10 | 0.32 | 0.21 | 0.23 | 0.25 | 0.4 | 0.32 | 0.20 | " , 0.20 or less |
| A-4 | Acute Systemic Toxicity Test | adapted | " | " | " | " | " | " | " | " | " | " , no abnormality, nor death |
| A-5 | Pyrogen Test | " | " | " | " | " | " | " | " | " | " | " , no fever |
| A-6 | Hemolysis Test | " | " | " | " | " | " | " | " | " | " | " , not hemolytic |
| B-1 | Pb (ppm) | <0.2 | <0.2 | <0.2 | 0.8 | 3.2 | 2.6 | 3.0 | 1.0 | 0.9 | 0.8 | DIN 0.01 mg Pb$^{2+}$/10 ml or less |
| B-2 | Ca ( " ) | <0.5 | <0.5 | <0.5 | 1.5 | 2.3 | 2.0 | 2.3 | 2.1 | 2.0 | 1.8 | —— —— |
| B-3 | Mg ( " ) | <0.5 | <0.5 | <0.5 | 0.5 | 0.6 | 0.6 | 0.6 | 0.7 | 0.7 | 0.6 | —— —— |
| B-4 | As ( " ) | <0.1 | <0.1 | <0.1 | <1 | <1 | <1 | <1 | <1 | <1 | <1 | 11-th Revision, note coloration |
| C-1 | Cl ( " ) | 4 | 6 | 7 | 13 | 23 | 31 | 33 | 35 | 33 | 23 | 11-th Revision ——, DIN 0.04 mg/10 ml or less |
| C-2 | SO$_4$ ( " ) | 0.6 | 0.8 | 0.9 | 2.0 | 2.8 | 2.2 | 2.3 | 2.8 | 2.5 | 2.2 | 11-th Revision —— |
| C-3 | PO$_3$ ( " ) | 0.3 | 0.4 | 0.7 | 1.6 | 1.0 | 1.7 | 2.1 | 2.3 | 2.1 | 1.6 | 11-th Revision |
| C-4 | NH$_3$ ( " ) | 0.4 | 0.4 | 0.3 | 2.0 | 2.7 | 2.1 | 2.5 | 2.9 | 2.7 | 2.2 | 11-th Revision 0.5 µg/ml or less, DIN 0.02 mg/10 ml or less |

14

Table 5 (continued)

| Marks | Item | Examples 8 | 9 | 10 | Comparative Examples 4 | 5 | 6 | 7 | 8 | 9 | 10 | Remarks (Standards, Standing Values) |
|---|---|---|---|---|---|---|---|---|---|---|---|---|
| D-1 | Formaldehyde | <1 | <1 | <1 | <5 | <5 | <5 | <10 | <10 | <10 | <10 | 11-th Revision, Detection Limit 0.5 µg/ml |
| D-2 | Phenols | <0.5 | <0.5 | <0.5 | <2 | <2 | <2 | < 2 | 2 | 2 | 2 | —  — |
| E | Sulfide Test | <5 | <5 | <5 | 62 | <5 | <5 | 72 | <5 | <5 | <5 | DIN $Na_2S$ 0.05mg/20 $cm^2$ —  — |
| F | Fine Particles (number) | | | | | | | | | | | |
| | 5 µm or less | 20 | 26 | 31 | 113 | 216 | 186 | 323 | 360 | 310 | 232 | |
| | 20 µm or less | 0 | 0 | 0 | 8 | 12 | 16 | 10 | 18 | 13 | 9 | |
| G | Rubber Fragmentation | 0 | 0 | 0 | 6 | 3 | 9 | 4 | 12 | 11 | 16 | BS 3 fragments or less |
| H | Liquid Leakage (ml) | 0 | 0 | 1 | 4 | 17 | 5 | 15 | 18 | 17 | 21 | —  — |
| I | Water Repellency | no | no | no | no | no good | no good | no good | no good | no good | no | —  no water drops |
| J | Needle Penetration | 0.23 | 0.24 | 0.22 | 0.43 | 0.46 | 0.44 | 0.45 | 0.53 | 0.43 | 0.63 | BS 1000 g or less |
| K | Rubber Surface Lubricity (angle°) | 39 | 37 | 37 | 44 | 45 | 46 | 46 | 48 | 46 | 44 | —  — |
| L | Water Vapor Transmission (g) | 0.7 | 0.3 | 0.5 | 1.6 | 2.2 | 3.2 | 2.0 | 3.8 | 3.5 | 1.2 | —  — |
| M | Gas Test in Head Space | small | small | small | medium | medium | medium | medium | medium | medium | medium | —  — |
| N | Alkali Resistance Test | 99 | 99 | 99 | 98 | 98 | 98 | 98 | 96 | 96 | 98 | —  — |
| O | Water Absorption and Drying Reduction | 100 | 99 | 99 | 98 | 98 | 98 | 98 | 95 | 96 | 99 | |
| P-1 | Isosorbide Nitrate | 1.8 | 1.7 | 1.6 | 3.2 | 4.0 | 3.0 | 2.9 | 5.6 | 5.0 | 4.2 | —  — |
| P-2 | Diazepam | 3 | 2.8 | 2.6 | 4.5 | 6.2 | 4.3 | 3.8 | 7.2 | 6.8 | 5.2 | —  — |

EP 0 324 554 B1

## Claims

1. Rubber articles (1) for medical or pharmaceutical use having a composition of 2 to 30 parts by weight of finely powdered polyethylene having a particle diameter of 0.1 to 10 mμ and an average molecular weight of 100 x 10$^4$ to 10000 x 10$^4$, 1 to 15 parts by weight of powdered or pelletized polyethylene having an average molecular weight of 5 x 10$^4$ to 80 x 10$^4$, 2 to 15 parts by weight of synthetic white carbon having an average particle diameter of 7 to 40 mμ and a specific surface area of 50 to 300 m$^2$/g and 0.01 to 50 parts by weight of a bridging agent per 100 parts by weight of polybutadiene or styrene butadiene rubber, said composition being bridged crosslinked and shaped.

2. Rubber articles (1) as claimed in claim 1, wherein the polybutadiene has a cis-1,4-butadiene content of at least 85% by weight.

3. Rubber articles (1) as claimed in claim 1 or claim 2, wherein the styrene butadiene has a styrene content of 18 to 48% by weight.

4. Rubber articles (1) as claimed in any one of the preceding claims in which the composition further comprises at most about 1 part by weight of a non-contaminating stabilizer selected from 2,6-butylp-cresol, tetra-bis(methylene-3(3′,5′-di-t-butyl-4′-hydroxyphenyl) propionate)methane, α-tocopherol and triphenyl phosphite.

5. Rubber articles (1) as claimed in any one of the preceding claims, wherein the white carbon comprises at least 85% by weight of silicic anhydride.

6. Rubber articles (1) as claimed in any one of the preceding claims, wherein the bridging agent is selected from 3,3,5-trimethylhexanone peroxide, diisobutyryl peroxide, 1,1-di(t-butylperoxy)-3,3,5-trimethylcyclohexane, 2,5-dimethyl-2,5-di(t-butylperoxy)-hexane, 2,5-dimethyl-2,5-di(t-butyl-peroxy)hexyne-3, n-butyl-4,4-bis(t-butylperoxy)-valerate, di(cyclohexylperoxy)dicarbonate and di-sec-butylperoxy di-carbonate.

7. Rubber articles (1) as claimed in any one of the preceding claims, wherein the bridging agent is selected from sulphur and sulphur-containing compounds such as tetramethylthiuram monosulphide and dipentamethylenethiuram tetrasulphide.

8. Rubber articles (1) as claimed in any one of the preceding claims, wherein the bridging is carried out using a bridging aid selected from triethylene glycol dimethacrylate, trimethylolpropane trimethacrylate, 1,2-polybutadiene, vinyl-trimethoxysilane, vinyltriacetoxysilane, γ-methacryloxypropyl-trimethoxysilane and γ-glycidoxypropyltrimethoxysilane.

9. Rubber articles (1) as claimed in any one of the preceding claims in which the composition further comprises a pigment selected from titanium oxides, carbon blacks, ultramarine blue and iron oxide red.

## Patentansprüche

1. Gegenstände (1) aus Kautschuk zur Verwendung im medizinischen oder pharmazeutischen Bereich, welche folgende Zusammensetzung aufweisen:
   - 2 bis 30 Gewichtsteile feinpulvriges Polyethylen mit einem Teilchendurchmesser von 0,1 bis 10 mμ und einem mittleren Molekulargewicht von 100 x 10$^4$ bis 10.000 x 10$^4$;
   - 1 bis 15 Gewischtsteile pulverisiertes oder pelletisiertes Polyethylen mit einem mittleren Molekulargewicht von 5 x 10$^4$ bis 80 x 10$^4$;
   - 2 bis 15 Gewichtsteile synthetischen weißen Kohlenstoffs mit einem mittleren Teilchendurchmesser von 7 bis 40 mμ und einer spezifischen Oberfläche von 50 bis 300 m$^2$/g; und
   - 0,01 bis 50 Gewichsteilen eines Verbrückungsmittels
   pro 100 Gewichsteile Polybutadien- oder Styrol-Butadien-Kautschuk, wobei die Zubereitung über Verbrückung vernetzt und in eine Form gebracht wird.

2. Gegenstände (1) aus Kautschuk nach Anspruch 1, worin das Polybutadien einen cis-1,4-Butadien-Gehalt von wenigstens 85 Gew.-% aufweist.

16

3. Gegenstände (1) aus Kautschuk nach Anspruch 1 oder Anspruch 2, worin das Styrol-Butadien einen Styrolgehalt von 18 bis 48 Gew.-% aufweist.

4. Gegenstände (1) aus Kautschuk nach irgendeinem der vorangehenden Ansprüche, worin die Zubereitung außerdem maximal etwa 1 Gewichtsteil eines nichtverunreinigenden Stabilisators umfaßt, der gewählt ist unter 2,6-Butyl-p-cresol, Tetra-bis-(methylen-3-(3′,5′-di-t.-butyl-4′-hydroxyphenyl-propionat-)methan, $\alpha$-Tocopherol und Triphenylphosphit.

5. Gegenstände (1) aus Kautschuk nach irgendeinem der vorangehenden Ansprüche, worin der weiße Kohlenstoff wenigstens 85 Gew.-% Kieselsäureanhydrid umfaßt.

6. Gegenstände (1) aus Kautschuk nach irgendeinem der vorangehenden Ansprüche, worin das Verbrückungsmittel gewählt ist unter 3,3,5-Trimethylhexanonperoxid, Diisobutyrylperoxid, 1,1-Di-(t.-butylperoxy-)3,3,5-trimethylcyclohexan, 2,5-Dimethyl-2,5-di-(t.-butylperoxy-)hexan,2,5-Dimethyl-2,5-di-(t.-butylperoxy-)hexin-3, n-Butyl-4,4-bis(t.-butylperoxy-)valerat, Di-(cyclohexylperoxy-)dicarbonat und Disec-butylperoxy-dicarbonat.

7. Gegenstände (1) aus Kautschuk nach irgendeinem der vorangehenden Ansprüche, worin das Verbrückungsmittel gewählt ist unter Schwefel und schwefelhaltigen Verbindungen wie beispielsweise Tetramethylthiurammonosulfid und Dipentamethylenthiuramtetrasulfid.

8. Gegenstände (1) aus Kautschuk nach irgendeinem der vorangehenden Ansprüche, worin die Verbrückung unter Einsatz eines Verbrückungs-Hilfsmittels durchgeführt wird, das gewählt ist unter Triethylenglycoldimethacrylat, Trimethylolpropantrimethacrylat, 1,2-Polybutadien, Vinyltrimethoxysilan, Vinyltriacetoxysilan, $\gamma$-Methacryloxypropyltrimethoxysilan und $\gamma$-Glycidoxypropyltrimethoxysilan.

9. Gegenstände (1) aus Kautschuk nach irgendeinem der vorangehenden Ansprüche, worin die Zubereitung außerdem ein Pigment umfaßt, das gewählt ist unter Titanoxiden, Rußen, Ultramarinblau und Eisenoxidrot.

**Revendications**

1. Articles en caoutchouc (1) pour usage médical ou pharmaceutique présentant une composition de 2 à 30 parties pondérales d'un polyéthylène finement pulvérisé ayant un diamètre de particules de 0,1 à 10 $\mu$m et un poids moléculaire moyen de $100 \times 10^4$ à $10\,000 \times 10^4$, 1 à 15 parties pondérales d'un polyéthylène en poudre ou granulé ayant un poids moléculaire moyen de $5 \times 10^4$ à $80 \times 10^4$, 2 à 15 parties pondérales de charge silicique synthétique ayant un diamètre moyen de particules de 7 à 40 $\mu$m et une surface spécifique de 50 à 300 m$^2$/g, et 0,01 à 50 parties pondérales d'un agent de pontage pour 100 parties pondérales de caoutchouc polybutadiène ou styrène butadiène, ladite composition étant pontée, réticulée et mise en forme.

2. Articles en caoutchouc (1) selon la revendication 1, où le polybutadiène présente une teneur en cis-1,4-butadiène d'au moins 85 % en poids.

3. Articles en caoutchouc (1) selon la revendication 1 ou 2, où le styrène butadiène présente une teneur en styrène de 18 à 48% en poids.

4. Articles en caoutchouc (1) selon une quelconque des revendications précédentes dans lesquels la composition comporte en outre au plus 1 partie pondérale d'un stabilisant non-contaminant, choisi parmi le 2,6-butylp-crésol, le tétra-bis(méthylène-3(3′,5′-di-t-butyl-4′-hydroxyphényl) propionate)méthane, l'$\alpha$-tocophénol et le phosphite de triphényle.

5. Articles en caoutchouc (1) selon l'une quelconque des revendications précédentes, où la charge silicique comprend au moins 85 % en poids d'anhydride silicique.

6. Articles en caoutchouc (1) selon l'une quelconque des revendications précédentes, où l'agent de pontage est choisi parmi le peroxyde de 3,3,5-triméthylhexanone, le peroxyde de diisobutyryle, le 1,1-di(t-butylperoxy)-3,3,5-triméthylcyclohexane, le 2,5 diméthyl-2,5-di(t-butylperoxy)hexane, le 2,5-diméthyl-2,5-di(t-

17

butylperoxy)hexyne-3, le n-butyl-4,4-bis(t-butylperoxy)-valerate, le dicarbonate de dicyclohexylperoxyde et le dicarbonate de di-sec-butylperoxyde.

7. Articles en caoutchouc (1) selon une quelconque des revendications précédentes, où l'agent de pontage est choisi parmi le soufre et les composés contenant du soufre tel que le monosulfure de tétraméthylthiuram et le tétrasulfure de dipentaméthylènethiuram.

8. Articles en caoutchouc (1) selon une quelconque des revendications précédentes, où le pontage est effectué en utilisant un adjuvant de pontage choisi parmi le diméthacrylate de triéthylène glycol, le triméthacrylate de triméthylolpropane, le 1,2-polybutadiène, le vinyl-triméthoxysilane, le vinyltriacétoxysilane, le γ-méthacryloxypropyl-triméthoxysilane et le γ-glycidoxypropyltriméthoxysilane.

9. Articles en caoutchouc (1) selon l'une quelconque des revendications précédentes dans lesquels la composition comporte en outre un pigment choisi parmi les oxydes de titane, les noirs de carbone, le bleu ultramarine, et le rouge d'oxyde de fer.

# FIG. 1